# EUROPEAN PATENT APPLICATION

(11) **EP 4 036 749 A1**
(43) Date of publication of application: **03.08.2022**
(21) Application number: 20867264.2
(22) Date of filing: 11.09.2020
(51) Int. Cl.: G06F 16/21

(54) **DATE SWITCHING DATA OFFLOADING METHOD, APPARATUS, DEVICE, AND MEDIUM**

(30) Priority: 27.09.2019 CN 201910925714
(71) Applicant: ZTE Corporation, Shenzhen, Guangdong 518057 (CN)
(72) Inventor: ZHOU, Riming, Shenzhen, Guangdong 518057 (CN); ZHAO, Pei, Shenzhen, Guangdong 518057 (CN); QIN, Yantao, Shenzhen, Guangdong 518057 (CN); FU, Yu, Shenzhen, Guangdong 518057 (CN); CHEN, Bei, Shenzhen, Guangdong 518057 (CN); CHEN, Hai, Shenzhen, Guangdong 518057 (CN); ZHANG, Xingqiang, Shenzhen, Guangdong 518057 (CN)
(74) Representative: Zoli, Filippo
(86) International application number: PCT/CN2020/114819
(87) International publication number: WO 2021/057515

(57) **Abstract**

A date switching data offloading method, an apparatus, a device, and a medium. The date switching data offloading method comprises: according to an unloading command, acquiring matching basic data of a data table (S110); according to a database log, performing a rollback operation on data after a date switching time point in the basic data of the data table so as to obtain data after data table rollback (S120); according to the database log and a transaction record of an accounting addition date, obtaining cross-day transaction data corresponding to the basic data of the data table (S130); and merging the data after data table rollback and the cross-day transaction data to obtain date switching data (S140).

## Description

### CROSS-REFERENCE TO RELATED APPLICATION

This application claims priority to Chinese Patent Application No. 201910925714.6 filed to the CNIPA on September 27, 2019, the entire contents of which are incorporated herein by reference.

### TECHNICAL FIELD

The present application relates to the technical field of databases, for example, to a date switching data offloading method, a date switching data offloading apparatus, a device and a medium.

### BACKGROUND

Date switching is commonly changing the accounting time of the system, i.e., amounting date switching. Under normal circumstances, one business transaction finishes within one accounting date. However, when the accounting date is switched, some transactions start before changing the accounting date (the accounting date is T+0) and are submitted after changing the accounting date (the accounting date is T+1). Therefore, these business transactions are called cross-date transactions. Although the cross-date transactions are submitted the next day, these transactions are still regarded as transactions on the previous day in data statistics, and the date switching data should contain these cross-date transactions.

After date switching, even if the business transactions on the next day (that is, the accounting date is T+1) start and finish immediately, there may be a phenomenon that T+1 transactions finish earlier than T+0 transactions. Therefore, under the premise of 24-hour continuous operation of the external on-line transaction service, it is impossible to find a time point in the database system to satisfy the requirements of offloading date switching data (at this time point, all T+0 transactions have been submitted, while all T+1 transactions have not yet been submitted), so that it is impossible to simply export the date switching data from the database. However, cleaning basic table data by an update table or an update field to obtain date switching data will increase the logic complexity of the service system and the difficulty in development.

### SUMMARY

The present application provides a date switching data offloading method, a date switching data offloading apparatus, a device and a medium, in order to directly offload, from a database, date switching data satisfying the requirements under the premise of continuous operation of an external transaction service.

A date switching data offloading method is provided, applied to a rational database, including:
acquiring basic data of a matched data table according to an offloading command;
performing, according to a database log, a rollback operation on data after a date switching time point in the basic data of the data table to obtain data after data table rollback;
obtaining, according to the database log and a transaction record of accounting date addition, cross-date transaction data corresponding to the basic data of the data table; and
merging the data after data table rollback and the cross-date transaction data to obtain date switching data.

A date switching data offloading method is further provided, applied to a distributed database, including:
acquiring, by an offloading proxy service deployed on a machine where a data slice is located, basic data of a locally matched data table according to an offloading command;
performing, by the offloading proxy service and according to a database log, a rollback operation on data after a date switching time point in the basic data of the data table to obtain data after data table rollback;
obtaining, by the offloading proxy service and according to the database log and a transaction record of accounting date addition, cross-date transaction data corresponding to the basic data of the data table;
merging, by the offloading proxy service, the cross-date transaction data and the data after data table rollback to obtain date switching slice data, and transmitting the date switching slice data to an offloading control module; and
upon receiving the date switching slice data transmitted by a plurality of offloading proxy services, performing data merging by the offloading control module to generate date switching data corresponding to the distributed database.

A date switching data offloading apparatus is further provided, applied to a relational database, including:
a data-table basic data acquisition module, configured to acquire basic data of a matched data table according to an offloading command;
a data rollback module, configured to perform, according to a database log, a rollback operation on data after a date switching time point in the basic data of the data table to obtain data after data table rollback;
a cross-date data supplement module, configured to obtain, according to the database log and a transaction record of accounting date addition, cross-date transaction data corresponding to the basic data of the data table; and
a date switching data generation module, configured to merge the data after data table rollback and the cross-date transaction data to obtain date switching data.

A date switching data offloading apparatus is further provided, applied to a distributed database, including:
a data-table basic data acquisition module, configured to acquire, by an offloading proxy service deployed on a machine where a data slice is located, basic data of a locally matched data table according to an offloading command;
a data rollback module, configured to perform, by the offloading proxy service and according to a database log, a rollback operation on data after a date switching time point in the basic data of the data table to obtain data after data table rollback;
a cross-date data supplement module, configured to obtain, by the offloading proxy service and according to the database log and a transaction record of accounting date addition, cross-date transaction data corresponding to the basic data of the data table;
a date switching slice data generation module, configured to merge, by the offloading proxy service, the cross-date transaction data and the data after data table rollback to obtain date switching slice data, and transmit the date switching slice data to an offloading control module; and
a date switching data generation module, configured to, upon receiving the date switching slice data transmitted by a plurality of offloading proxy services, perform data merging by the offloading control module to generate date switching data corresponding to the distributed database.

A computer device is further provided, including: one or more processers; and, a storage device configured to store one or more programs which, when executed by the one or more processers, cause the one or more processers to perform the date switching data offloading method applied to a relational database according to any one of the embodiments of the present application.

A storage medium is further provided, storing computer programs which, when executed by a processor, cause the processor to perform the date switching data offloading method applied to a relational database according to any one of the embodiments of the present application.

A computer device is further provided, including: one or more processers; and, a storage device configured to store one or more programs which, when executed by the one or more processors, cause the one or more processers to perform the date switching data offloading method applied to a distributed database according to any one of the embodiments of the present application.

A storage medium is further provided, storing computer programs which, when executed by a processor, cause the processor to perform the date switching data offloading method applied to a distributed database according to any one of the embodiments of the present application.

### BRIEF DESCRIPTION OF DRAWINGS

FIG. 1 is a schematic diagram of transaction submitting moments in 7^{∗}24-hour continuous on-line transaction processing;
FIG. 2 is a flowchart of a date switching data offloading method according to the present application;
FIG. 3 is a schematic diagram of a date switching data offloading scheme applied to a relational database according to the present application;
FIG. 4 is a schematic diagram of adding accounting date Hint flag to an on-line transaction in a date switching window period according to the present application;
FIG. 5 is a schematic diagram of date switching data offloading steps according to the present application;
FIG. 6 is a schematic diagram of the change of a data file in date switching data offloading steps according to the present application;
FIG. 7 is a flowchart of cross-date transaction supplementing according to the present application;
FIG. 8 is a flowchart of another date switching data offloading method according to the present application;
FIG. 9 is a schematic diagram of a date switching data offloading scheme applied to a distributed database according to the present application;
FIG. 10 is a schematic structural diagram of a date switching data offloading apparatus according to the present application;
FIG. 11 is a schematic structural diagram of another date switching data offloading apparatus according to the present application; and
Fig. 12 is a schematic structural diagram of a computer device according to the present application.

### DETAILED DESCRIPTION

The embodiments of the present application will be described in detail below with reference to the accompanying drawings.

The concepts related to date switching data will be explained before the embodiments of the present application are described.

Taking a distributed database as an example, the distributed data, as an On-Line Transaction Processing (OLTP) system, may periodically offload data to an analysis system (e.g., a data warehouse) for subsequent data analysis by other systems. After the transaction operation on that day ends, the service data up to that day should be offloaded to the analysis system, so that the analysis system analyzes the service situation from multiple angles. Instead of offloading all data of the whole system, the analysis system may filter out some data for offloading according to the analysis needs.

The On-Line Transaction Processing system handles transaction services in strict compliance with the accounting standards. When an On-Line Transaction Processing occurs, the application system firstly acquires the current date of the database system, then initiates a CRUD operation on the database, and finally submits it on the database. The whole process is called a transaction (or referred to as a business transaction). Each business transaction records the exact date of the transaction, so that data calculations such as interest calculation, service statistics or report auditing can be performed on this basis. The date of this transaction is called an accounting date. The accounting date will change once a day (usually at 00:00 a.m., from the previous day to the next day), which is called accounting date switching (or called date switching for short). After the date switching, the data of all business transactions having an accounting date of T+0 (e.g., business transactions started before the date switching time) (not including the data of any business transaction having an accounting date of T+1) should be completely offloaded. These data is called date switching data.

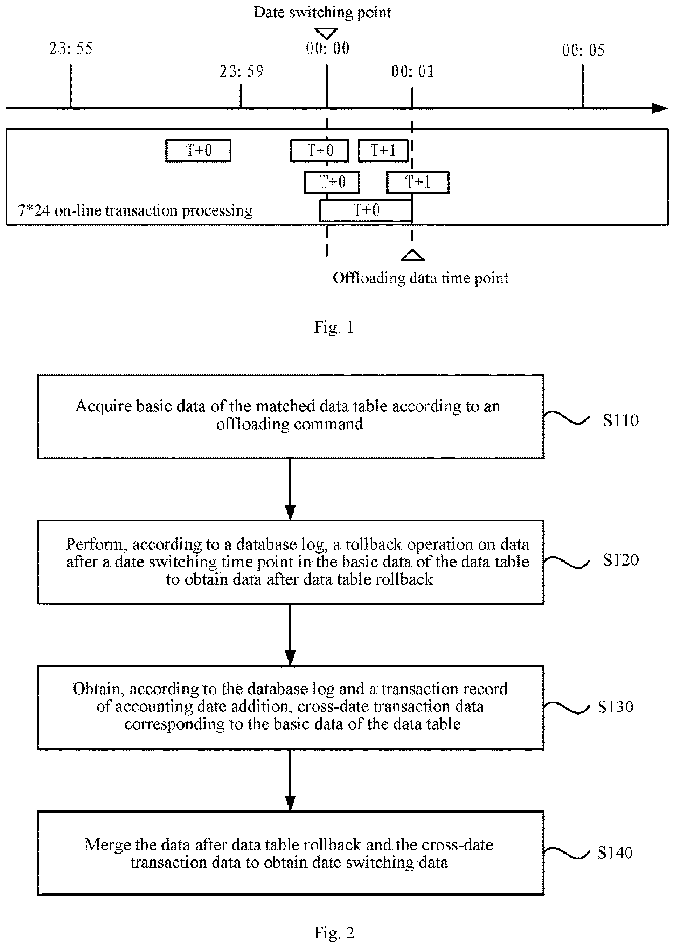

Under normal circumstances, one business transaction is completed within one accounting date. However, when the accounting date is switched, some business transactions start before changing the accounting date (the accounting date is T+0) and are submitted after changing the accounting date (the accounting date is T+1). Therefore, these business transactions are called cross-date transactions. Although the cross-date transactions are submitted the next day, these transactions are still regarded as business transactions on the previous day in data statistics, so that the date switching data contains data of the cross-date transactions. In addition, the key transaction system may provide external services for 24 hours without stoppage. After date switching, even if the business transactions on the next day (that is, the accounting date is T+1) start and finish immediately, there may be a situation that transactions having an accounting date of T+1 will finish earlier than transactions having an accounting date of T+0. As shown in FIG. 1, if the date is offloaded after the transactions having an accounting date of T+0 are completed, the offloaded date switching date may contain data of transactions having an accounting date of T+1. Therefore, it is impossible to find a definite time point in the database system, at which all transactions having an accounting date of T+0 have been submitted, while all transactions having an accounting date of T+1 have not yet been submitted. Therefore, it is impossible to simply export desired date switching data from the database.

In an embodiment, FIG. 2 is a flowchart of a date switching data offloading method according to the present application. This method is applied to the offloading of date switching data in a relational database (including centralized databases and distributed databases). This method can be executed by the date switching data offloading apparatus applied to a relational database according to the present application. The date switching data offloading apparatus can be implemented by software and/or hardware and integrated in a computer device.

As shown in FIG. 2, the date switching data offloading method applied to a relational database according to the present application includes the following steps of S110, S120, S130 and S140.

At S110, basic data of a matched data table is acquired according to an offloading command.

The offloading command refers to an instruction for indicating the start of the offloading operation. After the offloading command is received, the basic data of the data table matched with the content of the offloading command is acquired. The basic data of the data table is basic data in the related data table matched with the content of the offloading command in the database at the current moment.

In an embodiment, the offloading command includes: table information to be offloaded, a filter condition and a filter field.

The table information to be offloaded refers to the basic information of the data table to be subjected to data offloading. For example, the table information to be offloaded may be the name of the data table or the like. The filter condition refers to a condition that should be satisfied by set data in the data table to be subjected to data offloading. For example, the filter condition may be a value range or the like. The filter field refers to field information that should be satisfied by the set data in the data table to be subjected to data offloading. For example, the filter field may be a field name or the like.

If it is assumed that the database includes 100 data tables and the data to be offloaded is all or some data in at least some of data tables among the 100 data tables, it can be realized by an offloading command.

In an embodiment, the offloading command can be realized by a command.

At S120, a rollback operation is performed, according to a database log, on data after a date switching time point in the basic data of the data table to obtain data after data table rollback.

The date switching tine point refers to a time point for switching the accounting date. The data of transactions started before the date switching time point (including data of transactions started before the date switching time point and finished after the date switching time point) belongs to date switching data, while the data of transactions started after the date switching time point does not belong to date switching data.

A database log is acquired. The database log includes a timestamp of transaction completion, a data table of transaction operation, and a corresponding old row record value and new row record value in the corresponding data table before and after transaction completion. According to the database log, a rollback operation is performed on the data after the date switching time point in the basic data of the data table, that is, the data is rolled back to a corresponding record value before transaction completion. Furthermore, the data after data table rollback is basic data in the related data table matched with the content of the offloading command in the database at the date switching time point.

At S130, cross-date transaction data corresponding to the basic data of the data table is obtained according to the database log and a transaction record of accounting date addition.

A plurality of logs having a timestamp after the date switching time point are acquired from the database log, and the accounting date of a transaction corresponding to each of the logs is queried according to the transaction record of accounting date addition. If the queried accounting date is a date before accounting date switching (i.e., the date switching time point), the transaction is determined as a cross-date transaction, and cross-date transaction data corresponding to the cross-date transaction can be acquired according to the database log. The cross-date transaction data is data that initiates alteration before the date switching time point and completes alteration after the date switching time point. The data is a new record value after alteration.

At S140, the data after data table rollback and the cross-date transaction data are merged to obtain date switching data.

The cross-date transaction data is supplemented on the basis of the data after data table rollback to obtain a complete date switching data. Merging the data after data table rollback and the cross-date transaction data may be adding the cross-date transaction data correspondingly to the data after data table rollback, or replacing the record value corresponding to the data after data table rollback with the cross-date transaction data.

In the existing technology, one method is to stop providing On-Line Transaction Processing services externally during the accounting date switching and continue to provide services externally after all transactions having an accounting date of T+0 are completed. This method can find a time point satisfying the requirements of offloading date switching data, but it is required to stop providing services externally, so that the requirement of 24-hour continuous operation is not satisfied. Compared with this embodiment method, in the technical scheme provided in this embodiment, complete date switching data can be directly offloaded from the database when the transaction service system continuously provides services externally for 24 hours.

In the related technology, another method is to use an upstream application system of the database to additionally record the change of the database before and after accounting date switching into an update table (there are accounting date fields in the update table). When a downstream system of the database offloads data, the basic table and the update table are offloaded first, the data of the basic table is cleaned by the update table to remove the data of transactions having an accounting date of T+1 from the basic table. Alternatively, instead of using a separate update table, an update field is expanded in the basic table, and the field to be offloaded after the accounting date is altered is copied to the update field from the basic table. This method can satisfy the requirement that services are provided for 24 hours without stoppage, but the application system may do lots of special processing at the time of accounting date switching. Thus, the complexity of service logic is increased, and the difficulty in development of the application system is also increased. Moreover, the data cleaning by the downstream system is complex, and the time overhead is also increased due to data cleaning. Compared with this embodiment method, in the technical scheme provided in this embodiment, complete date switching data can be directly offloaded from the database when the transaction service system continuously provides services externally for 24 hours. Moreover, the upstream application of the database may do not need any additional service processing, and the downstream application of the database also may do not need any data cleaning operation. Therefore, the service development logic is simplified, and the overall time overhead for date switching date offloading is also reduced.

Based on the above embodiment, variant embodiments of the above embodiment are provided. For simplicity of description, only differences from the above embodiment will be described in the variant embodiments.

In an embodiment, before S110, the method further includes: receiving the data offloading command in the form of a command row transmitted by an offloading client module.

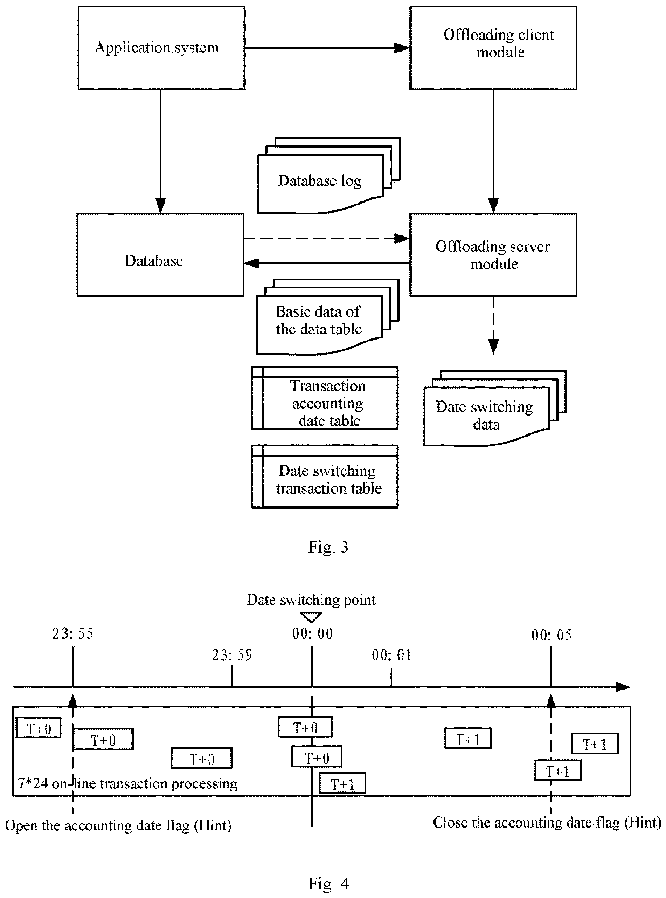

As shown in FIG. 3, the application system is an upper-layer application of the database. A CRUD operation is initiated to the database through a database interface (e.g., a structured query language (SQL) interface), and the application system calls an offloading client module. The offloading client module may be a command row. The offloading client module initiates an offloading request to an offloading server module in the database server through a local command or a remote interface. Upon receiving the offloading command, the offloading server module firstly acquires basic data of a matched data table according to the offloading command, then accesses a database log in the database, and performs, according to the database log, a rollback operation on the data after a date switching time point in the basic data of the data table to obtain data after data table rollback. Subsequently, the offloading server module accesses a transaction record of accounting date addition in the database, then obtains cross-date transaction data corresponding to the basic data of the data table according to the database log and the transaction record of accounting date addition, and finally merges the data after data table rollback and the cross-date transaction data to obtain date switching data.

In an embodiment, the performing, according to a database log, a rollback operation on data after a date switching time point in the basic data of the data table to obtain data after data table rollback includes:
determining, according to the database log, a date switching transaction log corresponding to a date switching transaction; and, according to the database log, rolling back the basic data of the data table to a moment corresponding to the date switching transaction log to obtain the data after data table rollback.

The date switching transaction refers to an operation transaction of the application system itself. In this transaction, the application system modifies an accounting date field (created by the application system) to a service table (created by the application system) of the database.

In the present application, for some specific transactions, a preset flag will be added in the transaction request, so that the database server can identify the transaction type according to the preset flag carried in the transaction request.

In an embodiment, an interface field (e.g., marked as "Hint") is expanded at the SQL interface through which the application system initiates a CRUD operation to the database, and the specific meaning of the transaction is transferred to the database through the Hint.

A Hint flag is added in the transaction request corresponding to the date switching transaction, and the switched accounting date is carried in the Hint flag, for example, "SET @SWITCHED_ACDATE = 2018-04-25;", where @SWITCHEDACDATE is a flag for switching the accounting date, and its value is the switched accounting date, for example, "2018-04-25". After the date transaction is completed, the accounting date is switched to "2018-04-26".

For example, the SQL statement of the original date switching transaction is:
SELECT CUR_ACDATE FROM SYSTEM_TABLE;
--Current accounting date is 2018-04-25
UPDATE SYSTEM_TABLE SET CUR_ACDATE=CUR_ACDATE+1;
COMMIT;

The SQL statement of the date switching transaction added with the Hint flag is:
SELECT CUR_ACDATE FROM SYSTEM_TABLE;
--Current accounting date is 2018-04-25
UPDATE SYSTEM_TABLE SET CUR_ACDATE=CUR_ACDATE+1;
--the database identifies the date switching data offloading request according the Hint statement
SET @SWITCHED_ACDATE=2018-04-25;
COMMIT;

In an embodiment, before the determining, according to the database log, a date switching transaction log corresponding to a date switching transaction, the method further includes:
if the received transaction request includes an accounting date switching flag, determining the transaction request as a date switching transaction request; and, updating a date switching transaction table according to the date switching transaction request, and generating a date switching transaction log corresponding to the date switching transaction.

In the database, one system table is maintained as a date switching transaction table which records the switched accounting date (SWITCHED_ACDATE). When the database service encounters the accounting date flag SET @SWITCHED_ACDATE in the process of parsing the SQL request, the accounting date of this transaction will be recorded in the context. When this transaction is submitted, the database will update the switched accounting date into the date switching transaction table and generate a corresponding date switching transaction log. The description of fields in the date switching transaction table is shown in Table 1.

**Table 1 Description of fields in the date switching transaction table**

| Field | Type | Description |
|---|---|---|
| SWITCHED_ACDAT E | DATE | Switched accounting date |

The database log in the database is accessed. The date switching transaction log corresponding to the date switching transaction is firstly determined, and the basic data of the data table is then rolled back to the location of the date switching transaction log, thus obtaining the data after data table rollback.

In an embodiment, the obtaining, according to the database log and a transaction record of accounting date addition, cross-date transaction data corresponding to the basic data of the data table includes:
acquiring a target log in the database log after a moment corresponding to the date switching transaction log; and, determining, according to the transaction record of accounting date addition and in the target log, a cross-date transaction log corresponding to a cross-date transaction, and determining, according to the cross-date transaction log, cross-date transaction data corresponding to the basic data of the data table, the accounting date of the cross-date transaction being the switched accounting date in the date switching transaction.

The database log in the database is accessed. Firstly, the date switching transaction log corresponding to the date switching transaction is determined. Then, all logs (these logs are called target logs) after the moment corresponding to the date switching transaction log in the database log are acquired, the accounting date of a transaction corresponding to each of these target logs is queried according to the transaction record of accounting date addition. The transaction having an accounting date that is a switched accounting date is a cross-date transaction, and the corresponding target log is a cross-date transaction log. Further, the cross-date transaction data corresponding to the basic data of the data table can be obtained by querying the cross-date transaction log.

In an embodiment, the determining, according to the transaction record of accounting date addition and in the target log, a cross-date transaction log corresponding to the cross-date transaction includes:
successively acquiring each log in the target log as a currently processed log; and, querying, from a transaction accounting date table, an accounting date of a transaction corresponding to the currently processed log, and if the accounting date of the transaction corresponding to the currently processed log is the switched accounting date in the date switching transaction, using the currently processed log as a cross-date transaction log until the target log is traversed, where the accounting date of the transaction is stored in the transaction accounting date table.

In the data base, one system table is also maintained as a transaction accounting date table which records the accounting date corresponding to each transaction. A transaction number and an accounting date of each transaction are recorded in the transaction accounting date table. The transaction number is a transaction identifier (TID) or a global transaction ID (GTID). If the transaction is only a query operation rather than any alteration operation, it is unnecessary to record this transaction in the transaction accounting date table. The description of fields in the transaction accounting date table is shown in Table 2.

**Table 2 Description of fields in the transaction accounting date table**

| Field | Type | Description |
|---|---|---|
| TID/GTID | 8-bit signed integer (INT8) | Transaction number |
| ACDATE | DATE | Accounting date |

In the process of determining whether the target log is a cross-date log, the accounting date of the transaction corresponding to the target log can be queried in the transaction accounting date table. If the queried accounting date is the switched accounting date, it can be determined that the transaction corresponding to the target log is a cross-date transaction and the target log is a cross-date log.

In an embodiment, before the determining, according to the transaction record of accounting date addition and in the target log, a cross-date transaction log corresponding to a cross-date transaction, the method further includes:
if the received transaction request includes an accounting date flag, adding the transaction number and accounting date of the transaction request to the transaction accounting date table as a transaction record.

For each on-line transaction initiated to the database by the application system, a Hint flag can be added. The accounting date can be carried in the Hint flag. For example, "SET @ACDATE = 2018-04-25;", where @ACDATE is a transaction accounting date flag, and its value is the accounting date value queried from the database at the beginning of the transaction, for example, "2018-04-25".

For example, the SQL statement of an original on-line transaction is:
SELECT CUR_ACDATE FROM SYSTEM_TABLE;
--Current accounting date is 2018-04-25
SELECT ...;
--Current accounting date is 2018-04-26, but the accounting date used by the service SQL is 2018-04-25
UPDATE ACCOUNT SET BAL=BAL+100, ACDATE = 2018-04-25 WHERE ...;
COMMIT;

The SQL statement of the on-line transaction added with the Hint flag is:
SELECT CUR ACDATE FROM SYSTEM_TABLE;
--Current accounting date is 2018-04-25
SELECT ...;
UPDATE ACCOUNT SET BAL=BAL+100, ACDATE = 2018-04-25 WHERE ...;
--The database records the accounting date of the transaction according to the Hint statement
SET @ACDATE = 2018-04-25;
COMMIT;

When the database service encounters SET @ACDATE in the process of parsing the SQL request, the accounting date of this transaction will be recorded in the execution context. At the moment when this transaction is submitted, the database will interpolate the transaction number (TID/GTID) and accounting date (ACDATE) into the transaction accounting date table as a record. If this transaction is only a query operation rather than an alteration operation, it is unnecessary to record this transaction.

In an embodiment, if the request time of the transaction request is within a date switching window period, the transaction request contains the accounting date flag, where the date switching window period is a set period of time including the date switching time point.

The on-line transaction duration is generally short, generally less than Is. A long enough time window is reserved before and after date switching, so that the cross-date transaction will only start within this window period and finish within this window period. This window period is called a date switching window period. The date switching window period is controlled by the application system. According to the control of the application system to the maximum length of the database transaction, the date switching widow period generally exceeds the maximum length of the business transaction. For example, the date switching window period is set as being from 5 minutes before date switching to 5 minutes after date switching.

In order to clarify cross-date transactions, the application system marks an accounting date for each transaction only within the date switching window period, and records this accounting date in the database when the transaction is submitted.

As shown in FIG. 4, after the date switching window period starts, the application system adds a Hint flag for each on-line transaction initiated to the database, and carries the accounting date in the Hint flag, for example, "SET @ACDATE = 2018-04-25;", until the date switching window period ends.

The accounting dates corresponding to all on-line business transactions within the date switching window period are recorded in the transaction accounting date table. After the date switching window period ends, all cross-date transactions have been completely recorded in the transaction accounting date table. The transaction accounting date table contains all transactions that are initiated and submitted within the date switching window period and have an accounting date of T+0, and all transactions that are initiated and submitted within the date switching window period and have an accounting date of T+1. Some of the transactions that are initiated and submitted within the date switching window period and have an accounting date of T+0 are cross-date transactions. Further, all cross-date transactions can be filtered out using the transaction accounting date table.

In an embodiment, as shown in FIG. 3, when the date switching window period ends, the application system calls an offloading client module which notifies an offloading server module of the offloading command. The offloading server module acquires basic data of the matched data table according to the offloading command, accesses the database log, the date switching transaction table and the transaction accounting date table in the database, and generates a corresponding date switching data file based on these data.

The offloading server module is a sub-module in the database, which can be deployed in a same machine together with the database service. Upon receiving the offloading command, the offloading server exports the basic data of the data table and performs data rollback and data supplement according to the date switching transaction table and the transaction accounting date table. During this process, a database log (binlog) is needed.

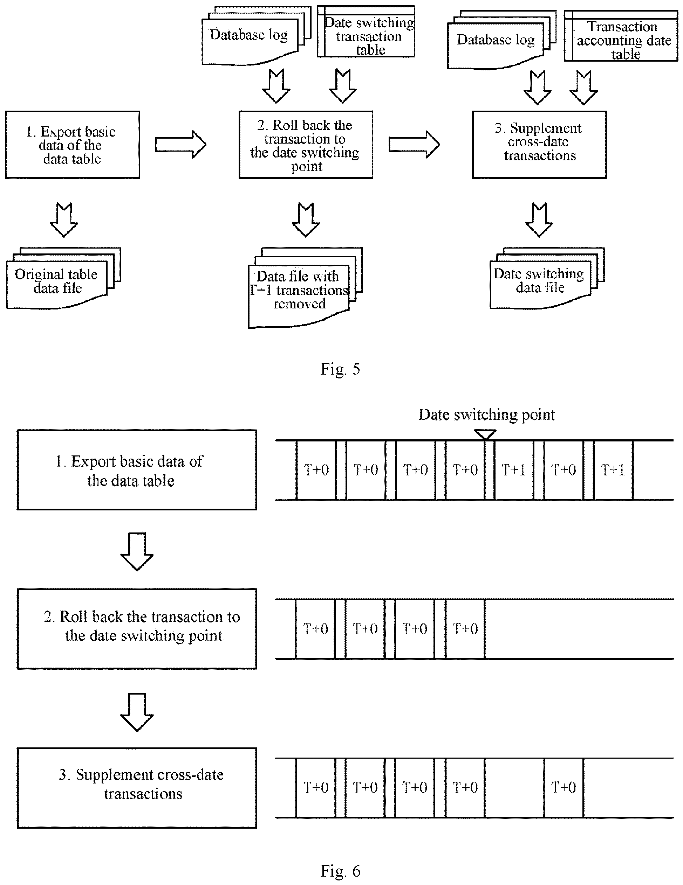

As shown in FIG. 5, the date switching data offloading includes three steps. At the first step, the basic data of the data table is exported to form an original table data file. At the second step, the original table data file is rolled back to a date switching time point according to a date switching transaction table and a database log to obtain a data file with T+1 transactions removed. At this time, all transactions having an accounting date of T+1 are removed. At the third step, based on the date switching transaction table and the database log, cross-date transactions are supplemented to the data file with T+1 transactions removed to obtain a date switching data file.

As shown in FIG. 6, the data file is subjected to the following changes in the three steps. At the first step, the data file includes transactions having an accounting date of T+0 and transactions having an accounting date of T+1. At the second step, all transactions having an accounting date of T+1 in the data file are moved, and cross-date transactions are also removed. At the third step, the cross-date transactions are supplemented to the data file.

Upon receiving the offloading command, the offloading server starts to export the basic data of the data table. Multiple statements SELECT INTO FILE WHERE ... are spliced according to the filter condition, and a batch operation is executed to export the data of the corresponding table to the data file. The data file is generally in the format of comma-separated values (CSVs). Each table is a file, and the table name can be used as the file name. When multiple tables may need to be exported, N tables are exported in parallel according to a pre-configured concurrency number, and the remaining tables are queued until all tables are exported.

The database log (binlog) records the change of the table record involved in the transaction when the database transaction is submitted, including a row value before modification (old-row-value) and a row value after modification (new-row-value) of this record. In addition, the binlog is written in a submission order of database transactions, that is, the binlog corresponding to the transaction submitted first is always written into the log file earlier than the binlog corresponding to the transaction submitted later, so the database can be rolled back to any moment according to the binlog.

In the present application, the exported data may be rolled back to the moment when the date switching transaction is submitted. The data at this moment does not contain any transaction having an accounting date of T+1, but lacks cross-date transactions. The rollback operation starts from the data export moment until a log corresponding to the date switching transaction in the binlog (i.e., a log in which the field SWITCHED_ACDATE of the date switching transaction table is updated). In the example shown in FIG. 3, the exported data is reversely rolled back to the location where the date switching transaction table is updated, i.e., the location corresponding to the timestamp 11. At this time, the data change after date switching will be rolled back and restored.

Since the cross-date transactions are submitted after switching the accounting date, there are still no data of the cross-date transactions in the data file obtained after rolling back the transactions having an accounting date of T+1, and it may be necessary to supplement the cross-date transactions to the data file. Corresponding logs of all transactions having an accounting date of T+0 in the transaction accounting date table can be searched from the binlog, and the rolled-back data file is processed again according to these logs.

**Table 3 binlog schematic table**

| | | |
|---|---|---|
| Timestamp 10 | Table: T1 | Old-row-value: A, 1 |
| | | New-row-value: A, 2 |
| Timestamp 11 | Table: Date switching transaction table | Old-row-value: 2018-04-25 |
| | | New-row-value: 2018-04-26 |
| Timestamp 12 | Table:T1 | Old-row-value: A, 2 |
| | | New-row-value: A, 3 |
| | Table:T2 | Old-row-value: B, 1 |
| | | New-row-value: B, 2 |

In an embodiment, the offloading server module sequentially parses the binlog from the location of the date switching transaction to the location of the export moment to obtain a log parsing list. A transaction is sequentially selected from the log parsing list for parsing. The TID/GTID of each transaction is acquired first, and it is then determined whether the ACDATE corresponding to the TID/GTID in the transaction accounting date table is T+0 (also referred to as the switched accounting date). If the ACDATE corresponding to the TID/GTID in the transaction accounting date table is T+0, a new record value of this transaction is extracted from the binlog and interpolated into a T+0 supplement table. The T+0 supplement table may be a memory structure, i.e., a table stored in the memory. If the ACDATE corresponding to the TID/GTID in the transaction accounting date table is not T+0, this transaction is discarded until multiple transactions in the log parsing list are parsed. Finally, the record row in the T+0 supplement table is used to replace the record corresponding to the data file previously rolled-back to the date switching point. Actually, it is an append operation. Thus, a date switching data file is obtained.

As shown in Table 4, it is assumed that two transaction logs are included between the location of the date switching transaction in the binlog and the export moment. Table 5 shows an example of the transaction accounting date table.

**Table 4 Example of logs between the location of the date switching transaction in the binlog and the export moment**

| Primary key ID | Timestamp number | Old TID/GTID | New TID/GTID | Old record value | New record value |
|---|---|---|---|---|---|
| 1234 | 1 | 101 | 102 | A,1 | A,2 |
| 5678 | 2 | 102 | 103 | A,2 | A,3 |

**Table 5 Example of the transaction accounting date table**

| TID/GTID | ACDATE |
|---|---|
| 102 | 4-25 |
| 103 | 4-26 |

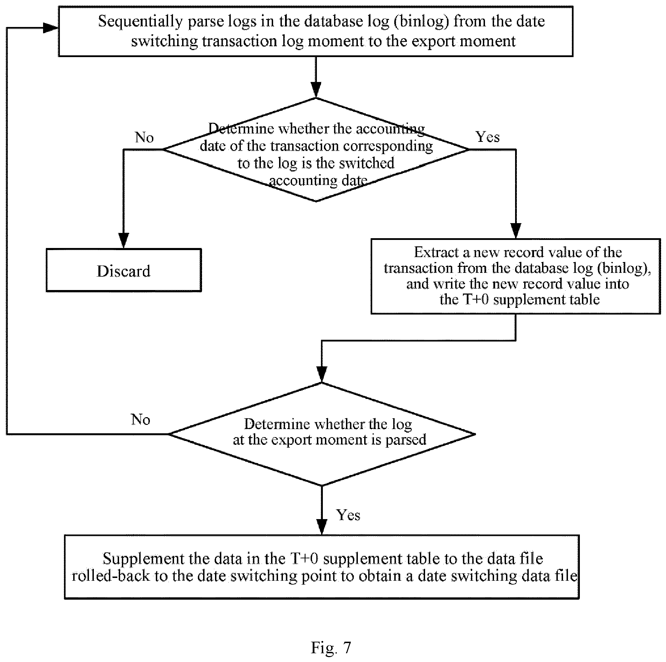

With reference to the flowchart of Fig. 7, the two transaction logs are parsed. The new TID/GTID of the transaction corresponding to the log having a timestamp number of 1 is 102. By looking up the transaction accounting date table, it can be known that the ACDATE corresponding to the TID/GTID 102 is 4-25 which is the switched accounting date T+0. The latest record (e.g., the primary key ID and the new record value) of this transaction in the binlog is acquired and added to the T+0 supplement table. The new TID/GTID of the transaction corresponding to the log having a timestamp number of 2 is 103. By looking up the transaction accounting date table, it can be known that the ACDATE corresponding to the TID/GTID 103 is 4-26 which is not the switched accounting date T+0, so that this transaction log is discarded. At this time, the T+0 supplement table is shown in Table 6.

**Table 6 Example of the T+0 supplement table**

| Primary key ID | Latest number | New record value |
|---|---|---|
| 1234 | 1 | A,2 |

It is assumed that the data file rolled-back to the date switching point is as shown in Table 7, and the data in the T+0 supplement table is supplemented to the data file rolled-back to the date switching point.

**Table 7 Example of the data file rolled-back to the date switching point**

| Primary key ID | Record value |
|---|---|
| 1234 | A,1 |

If the data file rolled-back to the date switching point contains the record matched with the data in the T+0 supplement table, the matched record value is replaced with the data in the T+0 supplement table; and, if data file rolled-back to the date switching point does not contain the record matched with the data in the T+0 supplement table, the data in the T+0 supplement table is added to the data file rolled-back to the date switching point to obtain the date switching data file.

As shown in Tale 7, the data file rolled-back to the date switching point contains the record matched with the data in the T+0 supplement table (the primary key ID is 1234), so the matched record value is replaced with the data in the T+0 supplement table to obtain the date switching data file shown in Table 8. In Table 8, only the supplemented data is shown, and the remaining date is not shown.

**Table 8 Example of the date switching data file**

| Primary key ID | Record value |
|---|---|
| 1234 | A,2 |

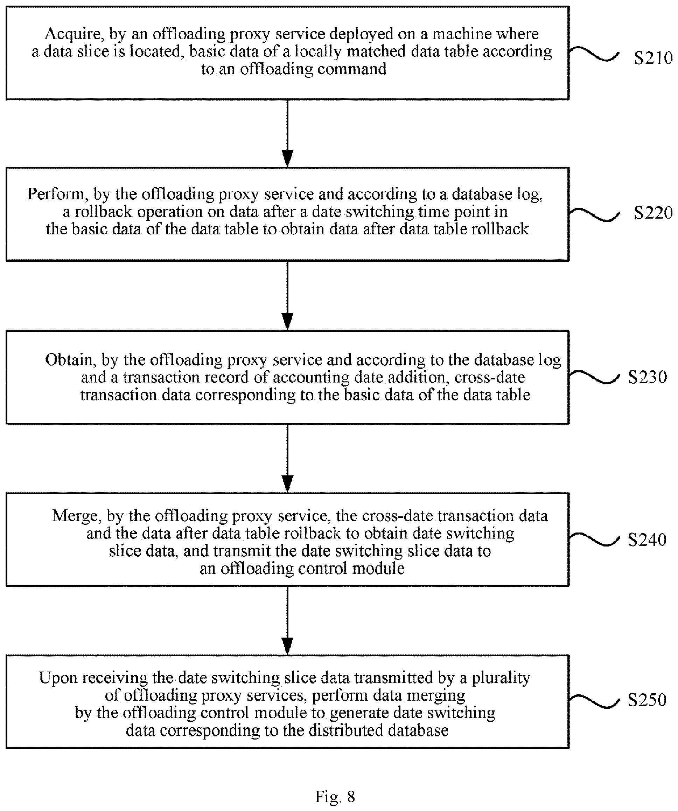

In an embodiment, FIG. 8 is a flowchart of another date switching data offloading method according to the present application. This method is applied to the offloading of date switching data in a distributed database. This method can be executed by the date switching data offloading apparatus applied to a distributed database according to the present application. The date switching data offloading apparatus can be implemented by software and/or hardware and integrated in a computer device.

As shown in FIG. 8, the date switching data offloading method applied to a distributed database according to the present application includes the following steps of S210, S220, S230, S240 and S250.

At S210, basic data of a locally matched data table is acquired by an offloading proxy service deployed on a machine where a data slice is located according to an offloading command.

At S220, a rollback operation is performed by the offloading proxy service on data after a date switching time point in the basic data of the data table according to a database log to obtain data after data table rollback.

At S230, cross-date transaction data corresponding to the basic data of the data table is obtained by the offloading proxy service according to the database log and a transaction record of accounting date addition.

At S240, the cross-date transaction data and the data after data table rollback are merged by the offloading proxy service to obtain date switching slice data, and the date switching slice data is transmitted to an offloading control module.

At S250, upon receiving the date switching slice data transmitted by a plurality of offloading proxy services, data merging is performed by the offloading control module to generate date switching data corresponding to the distributed database.

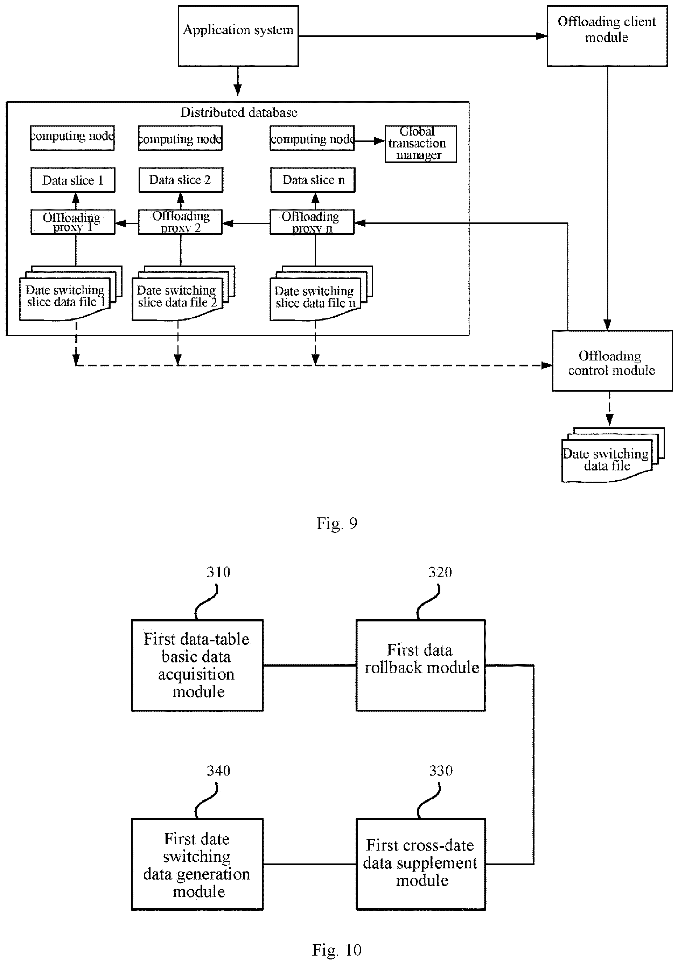

The date switching data offloading scheme for a distributed database is generally similar to the date switching data offloading scheme for a relational database. The function of the offloading server module is divided into two parts, i.e., offloading control and offloading proxy. As shown in FIG. 9, one offloading proxy service is deployed on a machine where each respective data slice is located, and offloading proxies 1/2/.../n are correspondingly deployed for the data slices 1/2/.../n. The main process of date switching offloading is completed by the offloading proxies.

The date switching data offloading process is uniformly controlled by the offloading control module, which coordinates each offloading proxy service to export the basic data of the data table, roll back transactions after the date switching transaction, supplement cross-date transactions or the like. The offloading proxy services locally completes the process of exporting the basic data of the data table, rolling back transactions and supplementing cross-date transactions, and form date switching slice data files corresponding to multiple slices. The processing process is the same as that for the relationship database. The multiple offloading proxy services transmit the local date switching slice data files to the offloading control module through a file transfer protocol (FTP) or other transfer protocols. The offloading control module merges all date switching slice data files to finally obtain the date switching data file of the distributed database.

In the technical scheme provided in this embodiment, the accounting date of each business transaction is recorded on the bottom layer of the distributed database. During data offloading, the data at respective data nodes are offloaded in parallel, and distributed transactions having an accounting date of T+1 are rolled back on the basis of a database log rollback mechanism, so that the date switching data is directly offloaded from the distributed database. By the offloading proxy service displayed on the machine where each respective data slice is located, the local offloading operation is realized, and the overhead for transferring data files and log files between nodes is reduced.

In an embodiment, the performing, by the offloading proxy service and according to a database log, a rollback operation on data after a date switching time point in the basic data of the data table to obtain data after data table rollback includes:
determining, by the offloading proxy service and according to the database log, a date switching transaction log corresponding to a date switching transaction; and, according to the database log, rolling back the basic data of the data table to a moment corresponding to the date switching transaction log to obtain the data after data table rollback.

In an embodiment, before the determining, by the offloading proxy service and according to the database log, a date switching transaction log corresponding to a date switching transaction, the method further includes: determining, by a database service, a received transaction request as a date switching transaction request if the transaction request includes an accounting date switching flag; and, updating a date switching transaction table according to the date switching transaction request, and generating a date switching transaction log corresponding to the date switching transaction.

In an embodiment, the obtaining, by the offloading proxy service and according to the database log and a transaction record of accounting date addition, cross-date transaction data corresponding to the basic data of the data table includes:
acquiring, by the offloading proxy service, a target log in the database log after a moment corresponding to the date switching transaction log; and, determining, according to the transaction record of accounting date addition and in the target log, a cross-date transaction log corresponding to a cross-date transaction, and determining, according to the cross-date transaction, cross-date transaction data corresponding to the basic data of the data table, the accounting date of the cross-date transaction being the switched accounting date in the date switching transaction.

In an embodiment, the determining, by the offloading proxy service, according to the transaction record of accounting date addition and in the target log, a cross-date transaction log corresponding to the cross-date transaction includes:
successively acquiring, by the offloading proxy service, each log in the target log as a currently processed log; and, querying, from a transaction accounting date table, an accounting date of a transaction corresponding to the currently processed log, and if the accounting date of the transaction corresponding to the currently processed log is a switched accounting date in the date switching transaction, using the currently processed log as a cross-date transaction log until the target log is traversed, where the accounting date of the transaction is stored in the transaction accounting date table.

In an embodiment, before the determining, by the offloading proxy service, according to the transaction record of accounting date addition and in the target log, a cross-date transaction log corresponding to the cross-date transaction, the method further includes:
adding, by the database service, the transaction number and accounting date of a received transaction request to the transaction accounting date table as a transaction record if the transaction request includes an accounting date flag.

In an embodiment, if the request time of the transaction request is within a date switching window period, the transaction request contains the accounting date flag, where the date switching window period is a set period of time including the date switching time point.

In an embodiment, before the acquiring, by an offloading proxy service deployed on a machine where a data slice is located, basic data of a locally matched data table according to an offloading command, the method further includes:
receiving, by the offloading proxy service deployed on the machine where the data slice is located, the offloading command transmitted by the offloading control module, the offloading command being transmitted to the offloading control module by the offloading client module in the form of a command row.

In an embodiment, the offloading command includes: table information to be offloaded, a filter condition and a filter field.

For what is not explained in detail in this embodiment, please refer to the above embodiments for the relational database, which will not be repeated here.

This embodiment further provides a date switching data offloading apparatus. FIG. 10 is a schematic structural diagram of a date switching data offloading apparatus according to the present application. As shown in FIG. 10, this embodiment of the present application provides a date switching data offloading apparatus applied to a relational database. The date switching data offloading apparatus can be implemented by software and/or hardware and integrated in a computer device. The apparatus includes: a first data-table basic data acquisition module 310, a first data rollback module 320, a first cross-date data supplement module 330 and a first date switching data generation module 340. The first data-table basic data acquisition module 310 is configured to acquire basic data of a matched data table according to an offloading command. The first data rollback module 320 is configured to perform, according to a database log, a rollback operation on data after a date switching time point in the basic data of the data table to obtain data after data table rollback. The first cross-date data supplement module 330 is configured to obtain, according to the database log and a transaction record of accounting date addition, cross-date transaction data corresponding to the basic data of the data table. The first date switching data generation module 340 is configured to merge the data after data table rollback and the cross-date transaction data to obtain date switching data.

In the technical scheme provided in this embodiment, during the 24-hour continuous external service of the transaction service system, complete date switching data can be directly offloaded from the database. Moreover, the upstream application system of the database may do not need any additional service processing, and the downstream application of the database may do not need any data cleaning operation, so the service development logic is simplified, and the overall time overhead for date switching date offloading is also reduced. In an embodiment, the first data rollback module 320 includes:
a date switching transaction log determination unit configured to determine, according to the database log, a date switching transaction log corresponding to a date switching transaction; and, a first data rollback unit configured to roll back, according to the database log, the basic data of the data table to a moment corresponding to the date switching transaction log to obtain the data after data table rollback.

In an embodiment, the first data rollback module 320 further includes:
a date switching transaction log generation unit configured to: before determining, according to the database log, a date switching transaction log corresponding to a date switching transaction, if the received transaction request includes an accounting date switching flag, determine the transaction request as a date switching transaction request; and, update a date switching transaction table according to the date switching transaction request, and generate a date switching transaction log corresponding to the date switching transaction.

In an embodiment, the first cross-date data supplement module 330 includes:
a target log module unit configured to acquire a target log in the database log after a moment corresponding to the date switching transaction log; and, a cross-date transaction determination unit configured to: determine, according to the transaction record of accounting date addition and in the target log, a cross-date transaction log corresponding to a cross-date transaction, and determine, according to the cross-date transaction, cross-date transaction data corresponding to the basic data of the data table, the accounting date of the cross-date transaction being the switched accounting date in the date switching transaction.

In an embodiment, the cross-transaction determination unit is configured to: successively acquire a log in the target log as a currently processed log; and, query, from a transaction accounting date table, an accounting date of a transaction corresponding to the currently processed log, and if the accounting date of the transaction corresponding to the currently processed log is the switched accounting date in the date switching transaction, use the currently processed log as a cross-date transaction log until the target log is traversed, where the accounting date of the transaction is stored in the transaction accounting date table.

In an embodiment, the first cross-date data supplement module 330 further includes:
a transaction accounting date table generation unit configured to: before determining, according to the transaction record of accounting date addition and in the target log, a cross-date transaction log corresponding to a cross-date transaction, if a received transaction request includes an accounting date flag, add a transaction number and an accounting date of the transaction request to the transaction accounting date table as a transaction record.

In an embodiment, if the request time of the transaction request is within a date switching window period, the transaction request contains the accounting date flag, where the date switching window period is a set period of time including the date switching time point.

In an embodiment, the apparatus further includes an offloading command receiving module configured to, before acquiring basic data of a matched data table according to the offloading command, receive the data offloading command in the form of a command row transmitted by an offloading client module.

In an embodiment, the offloading command includes: table information to be offloaded, a filter condition and a filter field.

The date switching data offloading apparatus applied to a relational database according to this embodiment is configured to perform the date switching data offloading method applied to a relational database according to the embodiments of the present application. The embodiment principles and technical effects of the date switching data offloading apparatus applied to a relational database according to this embodiment are similar to those of the date switching data offloading method applied to a relational database according to the embodiments of the present application, and will not be repeated here.

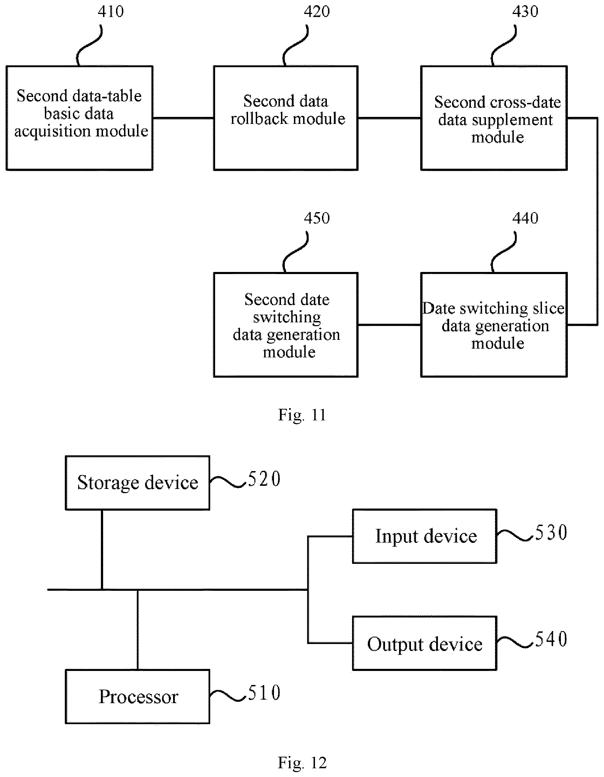

This embodiment further provides a date switching data offloading apparatus. FIG. 11 is a schematic structural diagram of another date switching data offloading apparatus according to the present application. As shown in FIG. 11, this embodiment of the present application provides a date switching data offloading apparatus applied to a distributed database. The date switching data offloading apparatus can be implemented by software and/or hardware and integrated in a computer device. The apparatus includes: a second data-table basic data acquisition module 410, a second data rollback module 420, a second cross-date data supplement module 430, a date switching slice data generation module 440 and a second date switching data generation module 450. The second data-table basic data acquisition module 410 is configured to acquire, by an offloading proxy service deployed on a machine where a data slice is located, basic data of a locally matched data table according to an offloading command. The second data rollback module 420 is configured to perform, by the offloading proxy service and according to a database log, a rollback operation on data after a date switching time point in the basic data of the data table to obtain data after data table rollback. The second cross-date data supplement module 430 is configured to obtain, by the offloading proxy service and according to the database log and a transaction record of accounting date addition, cross-date transaction data corresponding to the basic data of the data table. The date switching slice data generation module 440 is configured to merge, by the offloading proxy service, the cross-date transaction data and the data after data table rollback to obtain date switching slice data, and transmit the date switching slice data to an offloading control module. The second date switching data generation module 450 is configured to, upon receiving the date switching slice data transmitted by a plurality of offloading proxy services, perform data merging by the offloading control module to generate date switching data corresponding to the distributed database.

In the technical scheme provided in this embodiment, the accounting date of each business transaction is recorded on the bottom layer of the distributed database. During data offloading, the data at respective data nodes are offloaded in parallel, and distributed transactions having an accounting date of T+1 are rolled back on the basis of a database log rollback mechanism, so that the date switching data is directly offloaded from the distributed database. By the offloading proxy service displayed on the machine where each respective data slice is located, the local offloading operation is realized, and the overhead for transferring data files and log files between nodes is reduced.

The date switching data offloading apparatus applied to a distributed database according to this embodiment is configured to perform the date switching data offloading method applied to a distributed database according to the embodiments of the present application. The embodiment principles and technical effects of the date switching data offloading apparatus applied to a distributed database according to this embodiment are similar to those of the date switching data offloading method applied to a distributed database according to the embodiments of the present application, and will not be repeated here.

An embodiment of the present application provides a computer device. FIG. 12 is a schematic structural diagram of a computer device according to the present application. As shown in FIG. 12, the computer device according to the present application includes: one or more processors 510 and a storage device 520. There may be one or more processors 510 in the computer device, and one processor 510 is taken as an example in FIG. 12. The storage device 520 is configured to store one or more programs which, when executed by the one or more processors 510, cause the one or more processors 510 to perform the date switching data offloading method applied to a relational database or the date switching data offloading method applied to a distributed database according to the embodiments of the present application.

The processor 510 and the storage device 520 in the computer device may be connected via a bus or in other ways. In Fig. 12, the processor 510 and the storage device 520 being connected via a bus is taken as an example.

The storage device 520, as a computer-readable storage medium, can be configured to storage software programs, computer-executable programs and modules, for example, program instructions/modules corresponding to the date switching data offloading method applied to a relational database according to the embodiments of the present application (for example, the first data-table basic data acquisition module 310, the first data rollback module 320, the first cross-date data supplement module 330 and the first date switching data generation module 340 in the date switching data offloading apparatus applied to a relational database), or program instructions/modules corresponding to the date switching data offloading method applied to a distributed database according to the embodiments of the present application (for example, the second data-table basic data acquisition module 410, the second data rollback module 420, the second cross-date data supplement module 430, the date switching slice data generation module 440 and the second date switching data generation module 450 in the date switching data offloading apparatus applied to a distributed database). The storage device 520 may include a program storage region and a data storage region. The program storage region may store application programs required by the operating system and at least one function. The data storage region may store data created according to the use of the device, etc. In addition, the storage device 520 may include a high-speed random access memory, or a non-volatile memory, for example, at least one magnetic disk memory device, a flash memory device or other non-volatile solid-state memory devices. In some instances, the storage device 520 may further include memories remotely arranged relative to the processor 510. These remote memories may be connected to the computer device via a network. Examples of the network include, but not limited to, Internet, Intranet, local area networks, mobile communication networks and combinations thereof.

An input device 530 may be configured to receive input digit or character information and generate a key signal input related to user settings and function control of the computer device. An output device 540 may include a display screen or other display devices.

An embodiment of the present application further provided a storage medium storing computer programs which, when executed by a processor, cause the processor to perform the date switching data offloading method applied to a relational database according to any one of the embodiments of the present application or the date switching data offloading method applied to a distributed database according to any one of the embodiments of the present application.

The date switching data offloading method applied to a relational database includes steps of:
acquiring basic data of a matched data table according to an offloading command; performing, according to a database log, a rollback operation on data after a date switching time point in the basic data of the data table to obtain data after data table rollback; obtaining, according to the database log and a transaction record of accounting date addition, cross-date transaction data corresponding to the basic data of the data table; and, merging the data after data table rollback and the cross-date transaction data to obtain date switching data.

The date switching data offloading method applied to a distributed database includes steps of:
acquiring, by an offloading proxy service deployed on a machine where a data slice is located, basic data of a locally matched data table according to an offloading command; performing, by the offloading proxy service and according to a database log, a rollback operation on data after a date switching time point in the basic data of the data table to obtain data after data table rollback; obtaining, by the offloading proxy service and according to the database log and a transaction record of accounting date addition, cross-date transaction data corresponding to the basic data of the data table; merging, by the offloading proxy service, the cross-date transaction data and the data after data table rollback to obtain date switching slice data, and transmitting the date switching slice data to an offloading control module; and, upon receiving the date switching slice data transmitted by a plurality of offloading proxy services, performing data merging by the offloading control module to generate date switching data corresponding to the distributed database.

In an embodiment, the computer-executable instructions, when executed by a compute processor, cause the processor to perform the date switching data offloading method applied to a relational database according to any one of the embodiments of the present application or the date switching data offloading method applied to a distributed database according to any one of the embodiments of the present application.

Through the above description of the embodiments, it can be understood that the present application can be implemented by software and necessary general-purpose hardware, or by hardware. The technical schemes of the present application may be embodied in the form of a software product. The software product may be stored in a computer-readable storage medium, for example, floppy disks, read-only memories (ROMs), random access memories (RAMs), flash memories (FLASH), hard disks or optical disk, and include a plurality of instructions configured to cause a computer device (which may be a personal computer, a server, a network device, etc.) to execute the methods according to the embodiments of the present application.

In the embodiments of the date switching data offloading apparatus applied to a relational database or the date switching data offloading apparatus applied to a distributed database, the plurality of units and modules included are only divided according to the functional logics, but there is no limitation thereto, as long as the corresponding functions can be realized. In addition, the names of the plurality of functional units are merely for convenience of distinguishing and not intended to limit the protection scope of the present application.

The foregoing description merely shows the embodiments of the present application, and is not intended to limit the protection scope of the present application.

The term "user terminal" encompasses any suitable type of wireless user equipment, for example, mobile phones, portable data processing apparatuses, portable web browsers or vehicle-mounted mobile stations.

Generally, various embodiments of the present application may be implemented in hardware or dedicated circuits, software, logics or any combinations thereof. For example, some aspects may be implemented in hardware, while other aspects may be implemented in firmware or software that can be executed by a controller, a microprocessor or other computing apparatuses, although the present application is not limited thereto.

The embodiments of the present application may be implemented by executing computer program instructions by a data processor of a mobile device, for example, in processor entities, or by hardware, or by a combination of software and hardware. The computer program instructions may be assembly instructions, instruction set architecture (ISA) instructions, machine instructions, machine-related instructions, microcodes, firmware instructions, state setting data, or source codes or target codes written in any combination of one or more programming languages.

The blocks of any logic flow in the accompanying drawings of the present application may represent program steps, or may represent interconnected logic circuits, modules and functions, or may represent combinations of program steps and logic circuits, modules or functions. The computer programs may be stored on a memory. The memory may be of any type suitable for the local technical environment and may be implemented by any suitable data storage technology, for example, but not limited to, read only memories (ROMs), random access memories (RAMs), optical memory devices and systems (digital versatile discs (DVDs) or compact disks (CDs)), etc. The computer-readable medium may include non-transient storage mediums. The data processor may be of any type suitable for the local technical environment, for example, but not limited to, general purpose computers, special purpose computers, microprocessors, digital signal processors (DSPs), application specific integrated circuits (ASICs), field-programmable gate arrays (FGPAs), and processors based on a multicore processor architecture.

## Claims

1. A date switching data offloading method, applied to a relational database, comprising:
acquiring basic data of a matched data table according to an offloading command;
performing, according to a database log, a rollback operation on data after a date switching time point in the basic data of the data table to obtain data after data table rollback;
obtaining, according to the database log and a transaction record of accounting date addition, cross-date transaction data corresponding to the basic data of the data table; and
merging the data after data table rollback and the cross-date transaction data to obtain date switching data.

2. The method of claim 1, wherein performing, according to a database log, a rollback operation on data after a date switching time point in the basic data of the data table to obtain data after data table rollback comprises:
determining, according to the database log, a date switching transaction log corresponding to a date switching transaction; and
rolling back, according to the database log, the basic data of the data table to a moment corresponding to the date switching transaction log to obtain the data after data table rollback.

3. The method of claim 2, before determining, according to the database log, a date switching transaction log corresponding to a date switching transaction, further comprising:
in response to a received transaction request comprising an accounting date switching flag, determining the transaction request as a date switching transaction request; and
updating a date switching transaction table according to the date switching transaction request, and generating a date switching transaction log corresponding to the date switching transaction.

4. The method of claim 2 or 3, wherein obtaining, according to the database log and a transaction record of accounting date addition, cross-date transaction data corresponding to the basic data of the data table comprises:
acquiring a target log in the database log after a moment corresponding to the date switching transaction log; and
determining, according to the transaction record of accounting date addition and in the target log, a cross-date transaction log corresponding to a cross-date transaction, and determining, according to the cross-date transaction, cross-date transaction data corresponding to the basic data of the data table, the accounting date of the cross-date transaction being a switched accounting date in the date switching transaction.

5. The method of claim 4, wherein determining, according to the transaction record of accounting date addition and in the target log, a cross-date transaction log corresponding to a cross-date transaction comprises:
successively acquiring each log in the target log as a currently processed log; and
querying, from a transaction accounting date table, an accounting date of a transaction corresponding to the currently processed log, and in response to the accounting date of the transaction corresponding to the currently processed log being the switched accounting date in the date switching transaction, using the currently processed log as a cross-date transaction log until the target log is traversed;
wherein the accounting date of the transaction is stored in the transaction accounting date table.

6. The method of claim 5, before determining, according to the transaction record of accounting date addition and in the target log, a cross-date transaction log corresponding to a cross-date transaction, further comprising:
in response to the received transaction request comprising an accounting date flag, adding a transaction number and an accounting date of the transaction request to the transaction accounting date table as a transaction record.

7. The method of claim 6, further comprising:
in response to the request time of the transaction request being within a date switching window period, including the accounting date flag in the transaction request, the date switching window period being a set period of time including the date switching time point.

8. The method of claim 1, before acquiring basic data of the matched data table according to an offloading command, further comprising:
receiving the data offloading command in the form of a command row transmitted by an offloading client module.

9. The method of claim 1 or 8, wherein the offloading command comprises: table information to be offloaded, a filter condition and a filter field.

10. A date switching data offloading method, applied to a distributed database, comprising:
acquiring, by an offloading proxy service deployed on a machine where a data slice is located, basic data of a locally matched data table according to an offloading command;
performing, by the offloading proxy service and according to a database log, a rollback operation on data after a date switching time point in the basic data of the data table to obtain data after data table rollback;
obtaining, by the offloading proxy service and according to the database log and a transaction record of accounting date addition, cross-date transaction data corresponding to the basic data of the data table;
merging, by the offloading proxy service, the cross-date transaction data and the data after data table rollback to obtain date switching slice data, and transmitting the date switching slice data to an offloading control module; and
upon receiving the date switching slice data transmitted by a plurality of offloading proxy services, performing data merging by the offloading control module to generate date switching data corresponding to the distributed database.

11. A date switching data offloading apparatus, applied to a relational database, comprising:
a data-table basic data acquisition module, configured to acquire basic data of a matched data table according to an offloading command;
a data rollback module, configured to perform, according to a database log, a rollback operation on data after a date switching time point in the basic data of the data table to obtain data after data table rollback;
a cross-date data supplement module, configured to obtain, according to the database log and a transaction record of accounting date addition, cross-date transaction data corresponding to the basic data of the data table; and
a date switching data generation module, configured to merge the data after data table rollback and the cross-date transaction data to obtain date switching data.

12. A date switching data offloading apparatus, applied to a distributed database, comprising:
a data-table basic data acquisition module, configured to acquire, by an offloading proxy service deployed on a machine where a data slice is located, basic data of a locally matched data table according to an offloading command;
a data rollback module, configured to perform, by the offloading proxy service and according to a database log, a rollback operation on data after a date switching time point in the basic data of the data table to obtain data after data table rollback;
a cross-date data supplement module, configured to obtain, by the offloading proxy service and according to the database log and a transaction record of accounting date addition, cross-date transaction data corresponding to the basic data of the data table;
a date switching slice data generation module, configured to merge, by the offloading proxy service, the cross-date transaction data and the data after data table rollback to obtain date switching slice data, and transmit the date switching slice data to an offloading control module; and
a date switching data generation module, configured to: upon receiving the date switching slice data transmitted by a plurality of offloading proxy services, perform data merging by the offloading control module to generate date switching data corresponding to the distributed database.

13. A computer device, comprising:
at least one processer; and
a storage device configured to store at least one program;
wherein the at least one program, when executed by the at least one processor, causes the at least one processor to perform the date switching data offloading method of any one of claims 1 to 9 or the date switching data offloading method of claim 10.

14. A storage medium storing computer programs which, when executed by a processor, cause the processor to perform the date switching data offloading method of any one of claims 1 to 9 or the date switching data offloading method of claim 10.
